# EUROPÄISCHE PATENTSCHRIFT

(11) **EP 3 064 805 B1**
(45) Veröffentlichungstag und Bekanntmachung des Hinweises auf die Patenterteilung: **10.07.2019**
(21) Anmeldenummer: 15000649.2
(22) Anmeldetag: 05.03.2015
(51) Int. Cl.: F16H 25/24

(54) **SPINDEL MIT EINER OBERFLÄCHE AUS KERAMIK**
SPINDLE HAVING A SURFACE MADE OF CERAMIC
BROCHE DOTÉE D'UNE SURFACE EN CÉRAMIQUE

(43) Veröffentlichungstag der Anmeldung: 07.09.2016
(73) Patentinhaber: Lakeview Innovation Ltd., 6374 Buochs (CH)
(72) Erfinder: Samsfort, Peter, 79346 Endingen (DE); Buurlage, Thorsten, 69517 Gorxheimertal (DE)
(74) Vertreter: Grünecker Patent- und Rechtsanwälte PartG mbB

(56) Entgegenhaltungen:
- EP-A1- 1 918 597
- EP-A1- 2 574 807
- DE-A1-102011 120 197
- JP-A- H01 266 386
- JP-A- 2001 254 801

## Beschreibung

Die vorliegende Erfindung betrifft eine Spindel nach dem Oberbegriff des unabhängigen Anspruchs 1. Eine gattungsgemäße Spindel weist ein Außengewinde und eine Oberfläche aus Keramik auf, wobei die Spindel einen Kern aus Metall und einen Mantel aus Keramik aufweist, und wobei der Mantel den Kern zumindest abschnittsweise umgibt,. Ferner betrifft die vorliegende Erfindung einen Spindelantrieb mit einer derartigen Spindel.

Es ist bekannt, Spindeln aus Keramik herzustellen. Solche Keramikspindeln haben jedoch den Nachteil, dass sie aufgrund der Materialeigenschaften von Keramik im Vergleich zu Metallspindeln nicht sehr widerstandsfähig gegenüber Zug- und Biegebelastungen sind, welche daher leicht zu Beschädigungen oder zur Zerstörung einer Keramikspindel führen können. Solche Belastungen treten u.a. bereits im normalen Betrieb durch die Kerbwirkung des Außengewindes auf. Üblicherweise wird versucht, solche Belastungen bei Keramikspindeln über besonders ausgebildete Lageranordnungen oder die Verwendung besonderer Muttern bei Gleit- oder Kugelumlaufspindeln zu reduzieren. Dies ist jedoch mit einem hohen Aufwand verbunden. Des Weiteren können Keramikspindeln auch durch Schlagbelastungen, wie sie beispielsweise beim Transport auftreten, beschädigt werden.

Aus der DE 10 2011 120 197 A1 ist beispielsweise eine Spindel mit einem Kern aus einem mit Kohlenstofffasern verstärktem Kunststoff bekannt, die an ihrer Oberfläche mit einer Hartschicht-Konfiguration, beispielswiese aus Metall, versehen ist, um die Festigkeit und Steifigkeit einer Vollmetallspindel zu erreichen.

Die aus der DE 10 2011 120 197 A1 bekannten Spindel ist jedoch nicht geeignet, um besonders hohe Zug- und Biegebelastungen aufzunehmen.

Eine Spindel nach dem Oberbegriff des unabhängigen Anspruchs 1 ist beispielsweise aus JP 2001 254801 A bekannt.

Es ist die Aufgabe der vorliegenden Erfindung, eine Spindel mit einer Oberfläche aus Keramik bereitzustellen, die widerstandsfähig gegenüber Zug- und Biegebelastungen ist und sich einfach und kostengünstig herstellen lässt.

Die Aufgabe wird gelöst durch die Merkmale des Anspruchs 1. Demnach liegt bei einer Spindel der eingangs genannten Art dann eine erfindungsgemäße Lösung der Aufgabe vor, wenn das Außengewinde nur im Mantel und nicht im innenliegenden Kern ausgebildet ist.

Die Erfindung bietet den Vorteil, dass Zug- und Biegebelastungen der Spindel vom Kern abgefangen, bzw. vom Mantel auf den Kern abgeleitet werden. Insbesondere werden die Belastungen im Mantel reduziert. Auch die Belastungen durch die Kerbwirkung des Außengewindes werden vom Kern abgefangen. Eine erfindungsgemäße Spindel kann gegenüber einer Keramikspindel höhere Belastungen aushalten. Durch die innenliegende Anordnung des Kerns aus Metall nahe der Achse der Spindel wird das Trägheitsmoment der Spindel nur geringfügig beeinflusst. Die Erfindung bietet den Vorteil, dass die Spindel mit einer geschliffenen, gleitmodifizierten Keramikoberfläche ausgeführt werden kann und gleichzeitig unempfindlich gegenüber Zug- und Biegespannungen ist. Sie kann daher hohe Axialkräfte aufnehmen.

Die Erfindung eignet sich besonders für Gleit- und Kugelumlaufspindeln. Diese profitieren besonders von den Eigenschaften einer Oberfläche aus Keramik, beispielsweise in Bezug auf die Reibungseigenschaften, und in Bezug auf die Belastbarkeit.

In einer Ausführungsform kann der Mantel über seine gesamte Länge eine gleichbleibende Materialstärke aufweisen. Es ist jedoch auch möglich, dass der Mantel eine variable Materialstärke aufweist, um beispielsweise Änderungen des Kerns auszugleichen.

In einer weiteren Ausführungsform weist der Kern über seine gesamte Länge eine gleichbleibende Materialstärke auf. Es ist jedoch auch möglich, dass der Kern eine variable Materialstärke aufweist. Beispielsweise kann der Kern abschnittsweise verjüngt sein, um Gewicht einzusparen, oder abschnittsweise verdickt sein, beispielsweise an Stellen mit hoher Belastung. Es ist auch möglich, dass der Kern entlang der Oberfläche der Spindel bündig in den Mantel übergeht.

In einer weiteren Ausführungsform können der Kern und/oder der Mantel entlang der Achse der Spindel aus mehreren miteinander verbundenen Abschnitten bestehen. Es hat sich als vorteilhaft herausgestellt, wenn Kern und Mantel jeweils einteilig ausgebildet sind. Weitere vorteilhafte Ausgestaltungen der vorliegenden Erfindung sind Gegenstand der Unteransprüche.

In einer bevorzugten Ausführungsform sind der Kern und der Mantel jeweils in Bezug auf die Achse der Spindel als rotationssymmetrische Körper ausgebildet, die konzentrisch angeordnet sind.

In einer weiteren bevorzugten Ausführungsform ist der Kern im Wesentlichen zylinderförmig ausgebildet. Ein solcher Kern lässt sich besonders einfach herstellen. Bei dieser Ausführungsform kann als Kern eine gewöhnliche Metallwelle verwendet werden. Insbesondere kann der Kern ein Teil einer Abgangswelle eines Spindelantriebs sein.

In einer weiteren bevorzugten Ausführungsform ist der Mantel als selbsttragendes, separates Bauteil ausgebildet. Dadurch lässt sich die Spindel besonders einfach an anwendungsspezifische Anforderungen anpassen, indem ein entsprechend den Anforderungen optimierter Mantel mit einem einheitlichen Kern verbunden wird.

In einer weiteren bevorzugten Ausführungsform ist der Mantel im Wesentlichen hohlzylinderförmig ausgebildet. Ein solcher Mantel lässt sich einfach herstellen und mit dem Kern verbinden. Bei dieser Ausführungsform kann der mit einem Außengewinde versehene hohlzylinderförmige Mantel einfach auf einen zylinderförmigen Kern aufgeschoben und mit diesem verbunden werden, um eine erfindungsgemäße Spindel zu bilden.

In einer weiteren bevorzugten Ausführungsform weist die Spindel zumindest einen Abschnitt auf, in dem die Außenseite des Kerns und die Innenseite des Mantels kegelstumpfförmig ausgebildet sind. Dadurch können Axialkräfte besonders gut auf den Kern übertragen werden.

In einer weiteren bevorzugten Ausführungsform besteht der Kern aus Stahl. Aufgrund der Materialeigenschaften von Stahl wird die Spindel dadurch besonders widerstandsfähig gegenüber Zug- und Biegebelastungen.

In einer weiteren bevorzugten Ausführungsform besteht der Mantel aus einer Oxidkeramik. Aufgrund der Materialeigenschaften von Oxidkeramiken weist die Oberfläche der Spindel dadurch eine hohe Festigkeit auf und ist besonders widerstandsfähig gegenüber Verschleiß. Besonders bevorzugt besteht der Mantel aus Zirkonoxid. Zirkonoxid weist einen hohen Wärmeausdehnungskoeffizienten auf, so dass es besonders gut zur Verbindung mit Metall geeignet ist. Ganz besonders bevorzugt besteht der Mantel aus mit Yttrium verstärktem Zirkoniumoxid. Dieses Material ist durch seine hohe Festigkeit und Risszähigkeit besonders als Mantelmaterial geeignet.

In einer weiteren bevorzugten Ausführungsform ist der Kern nach dem CIM-Verfahren (ceramic injection molding) hergestellt. Dabei kann das Außengewinde des Mantels bei der Herstellung des Mantels gegossen werden, wodurch der Herstellungsaufwand und die Herstellungskosten reduziert werden.

In einer weiteren bevorzugten Ausführungsform weist die Spindel einen Durchmesser von höchstens 15 mm auf. Bei diesen Abmessungen kann das höhere Gewicht des Metallkerns gegenüber einer Vollkeramikspindel vernachlässigt werden. Das zusätzliche Gewicht des Metallkerns hat nur einen geringfügigen Einfluss auf das Trägheitsmoment der Spindel.

In einer weiteren bevorzugten Ausführungsform weist der Kern einen Lagerabschnitt auf, in dem der Mantel den Kern nicht umgibt und die Spindel am Kern lagerbar ist. Dadurch lässt sich die erfindungsgemäße Spindel besonders einfach lagern, da die Spindel nicht an dem im Vergleich zum Kern empfindlicheren Keramikmantel gelagert werden muss. Des Weiteren wirken sich bei dieser Ausführungsform Ungenauigkeiten bei der Verbindung zwischen dem Kern und dem Mantel nicht auf die Genauigkeit der Lagerung aus. Vorzugsweise ist der Lagerabschnitt an zumindest einem axialen Ende der Spindel ausgebildet.

In einer weiteren bevorzugten Ausführungsform sind der Kern und der Mantel stoffschlüssig miteinander verbunden. Dadurch lässt sich die erfindungsgemäße Spindel besonders einfach herstellen. Insbesondere können bei dieser Ausführungsform Kern und Mantel als separate Bauteile hergestellt und anschließend miteinander verbunden werden. Außerdem ist es bei dieser Ausführungsform möglich, bereits vorhandene Metallwellen mit einem keramischen Mantel nachzurüsten.

In einer besonders bevorzugten Ausführungsform sind der Kern und der Mantel miteinander verklebt. Dadurch lässt sich die erfindungsgemäße Spindel besonders kostengünstig herstellen. Klebeverbindungen sind hitzebeständig und können den mechanischen Belastungen der Spindel standhalten.

In einer weiteren besonders bevorzugten Ausführungsform sind zwischen der Innenseite des Mantels und der Außenseite des Kerns Zwischenräume ausgebildet, über die der Kern und der Mantel stoffschlüssig verbindbar sind. Dadurch können der Kern und der Mantel zur exakten Ausrichtung aneinander anliegen und gleichzeitig kann eine zuverlässige Verbindung hergestellt werden.

Besonders bevorzugt umfassen die Innenseite des Mantels und/oder die Außenseite des Kerns Kontaktflächen, die eine bestimmte Oberflächenstruktur oder Oberflächenbehandlung aufweisen, um die Klebeverbindung zu verbessern. Beispielsweise können die Innenseite des Mantels und die Außenseite des Kerns an den Verbindungsflächen aufgeraut sein.

In einer weiteren bevorzugten Ausführungsform sind der Kern und der Mantel formschlüssig miteinander verbunden. Dadurch können Kern und Mantel besonders einfach miteinander verbunden werden, wobei eine zuverlässige Drehmomentübertragung zwischen Kern und Mantel gewährleistet ist. Vorzugsweise kann die Spindel einen Formschlussbereich umfassen, in dem am Kern und am Mantel korrespondierende Formschlusselemente ausgebildet sind. Beispielsweise kann der Kern an einem axialen Ende radiale Stege aufweisen, die in radiale Nuten des Mantels eingreifen. Außerdem kann der Mantel bei dieser Ausführungsform bei Verschleiß oder Beschädigung einfach ausgetauscht werden.

In einer weiteren bevorzugten Ausführungsform ist der der Mantel als Beschichtung auf den Kern aufgebracht. Dadurch lassen sich der Durchmesser der Spindel bzw. die Dicke des Mantels besonders genau bestimmen und an anwendungsbedingte Anforderungen anpassen. Vorzugsweise wird das Außengewinde bei dieser Ausführungsform am Mantel ausgebildet, nachdem der Kern mit dem Mantel beschichtet ist.

In einer weiteren bevorzugten Ausführungsform ist der Kern mehrschichtig. Dadurch kann ein Kern aus unterschiedlichen Materialen so aufgebaut werden, dass in Bezug auf die Wärmeausdehnungskoeffizienten ein stufenförmiger Übergang vom Kern zum Mantel entsteht. Dadurch können innere Spannungen aufgrund von unterschiedlichen Wärmeausdehnungskoeffizienten reduziert werden. Es ist alternativ jedoch auch denkbar, dass der Kern aus mehreren Schichten des gleichen Materials besteht. Die einzelnen Schichten des Kerns sind dabei vorzugsweise stoffschlüssig miteinander verbunden, beispielsweise verklebt, verlötet oder verschweißt. Sie können jedoch auch auf eine beliebige andere Art und Weise miteinander verbunden sein.

In einer weiteren bevorzugten Ausführungsform ist der Mantel mehrschichtig aufgebaut. Dadurch kann beispielsweise die äußerste Schicht des Mantels durch die Verwendung einer geeigneten Keramik an besondere Anforderungen der Oberfläche angepasst werden. Beispielsweise kann für die Oberfläche eine Schicht aus einer besonders harten Keramik verwendet werden. In dieser Schicht kann auch das Außengewinde ausgebildet sein. Des Weiteren kann der Mantel bei dieser Ausführungsform an seiner Innenseite eine Schicht aufweisen, deren Wärmeausdehnungskoeffizient so gewählt ist, dass ein stufenförmiger Übergang zwischen dem Kern und dem Rest des Mantels entsteht. Dadurch können innere Spannungen aufgrund unterschiedlicher Wärmeausdehnungskoeffizienten verringert werden.

Die vorliegende Erfindung stellt ferner einen Spindelantrieb mit einer erfindungsgemäßen Spindel und einem Antriebselement bereit.

Vorzugsweise handelt es sich bei dem Spindelantrieb um einen Direktantrieb oder um einen Antrieb mit Getriebe. Das Antriebselement kann beispielsweise ein Motor und/oder ein Getriebe bzw. eine Abgangswelle eines Motors oder eines Getriebes sein. Das Koppeln der Spindel an das Antriebselement bezeichnet im Rahmen der Erfindung eine drehfeste Verbindung zwischen der Spindel und dem Antriebselement. Dies umfasst insbesondere auch, dass der Kern und/oder der Mantel der Spindel an das Antriebselement gekoppelt sind.

In einer bevorzugten Ausführungsform sind der Kern und/oder der Mantel der Spindel einteilig mit dem Antriebselement ausgebildet. Dadurch ergibt sich eine besonders einfache Konstruktion des Spindelantriebs.

In einer weiteren bevorzugten Ausführungsform weist die Spindel ein Verbindungselement auf, mit dem es an das Antriebselement koppelbar ist. Dadurch lassen sich auch komplexe Anschlüsse realisieren. Vorteilhafterweise ist das Verbindungselement an einem axialen Ende der Spindel ausgebildet.

In einer besonders bevorzugten Ausführungsform ist das Verbindungselement ein Abschnitt des Kerns, in dem der Mantel den Kern nicht umgibt und die Spindel am Kern an das Antriebselement koppelbar ist. Dadurch lässt sich die Spindel besonders einfach an das Antriebselement koppeln. Dabei kann die Spindel über den im Vergleich zum Mantel widerstandsfähigeren Kern aus Metall gekoppelt werden, sodass insbesondere auch bereits von konventionellen Metallspindel bekannte Kopplungsvorrichtungen verwendet werden können.

Vorteilhafte Ausführungsbeispiele der vorliegenden Erfindung werden im Folgenden anhand von Zeichnungen näher erläutert. Es zeigen:
- Fig. 1: eine schematische Darstellung eines ersten Ausführungsbeispiels einer erfindungsgemäßen Spindel,
- Fig. 2: die Spindel der Fig. 1 im Querschnitt,
- Fig. 3: die Spindel der Fig. 1 und 2 in Perspektive,
- Fig. 4: ein zweites Ausführungsbeispiel einer erfindungsgemäßen Spindel,
- Fig. 5: ein drittes Ausführungsbeispiel einer erfindungsgemäßen Spindel und
- Fig. 6: eine schamtische Darstellung eines Ausführungsbeispiels eines erfindungsgemäßen Spindelantriebs.

Für die folgenden Ausführungen gilt, dass gleiche Teile durch gleiche Bezugszeichen bezeichnet werden. Sofern in einer Zeichnung Bezugszeichen enthalten sind, auf die in der zugehörigen Figurenbeschreibung nicht näher eingegangen wird, so wird auf vorangehende oder nachfolgende Figurenbeschreibungen Bezug genommen.

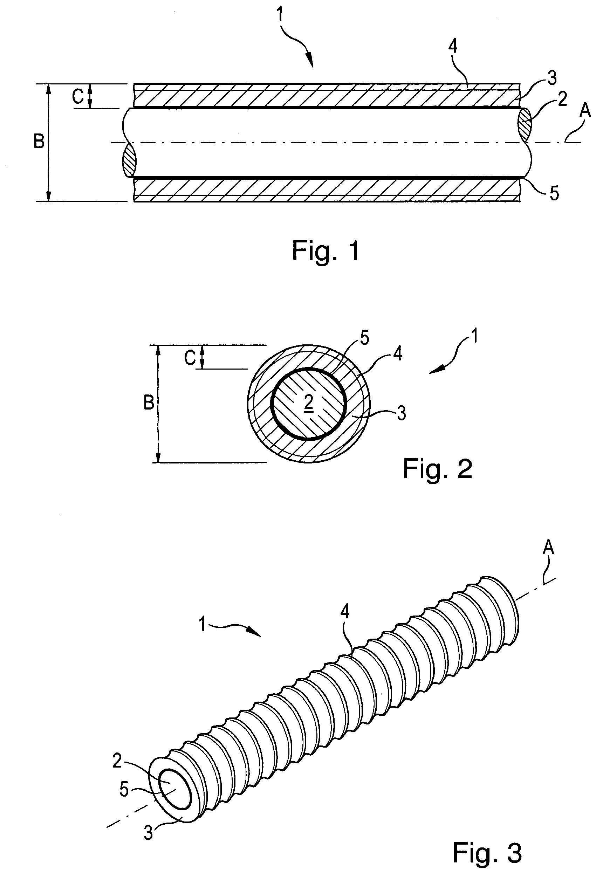

Die in den Fig. 1, 2 und 3 dargestellte erfindungsgemäße Spindel 1 weist einen Kern 2 und einen Mantel 3 auf, wobei der Mantel 3 den Kern 2 umgibt. Am Mantel 3 ist ein Außengewinde 4 ausgebildet. Der Kern 2 ist vollzylindrisch und besteht aus Stahl. Der Mantel 3 ist hohlzylindrisch bzw. rohrförmig und besteht aus mit Ytrium verstärktem Zirkonoxid. Der Mantel wurde nach dem CIM-Verfahren hergestellt und verfügt über eine geschliffene, gleitmodifizierte Oberfläche. Kern 2 und Mantel 3 sind einteilig und einschichtig ausgebildet und miteinander verklebt. Dabei bildet sich zwischen dem Kern 2 und dem Mantel 3 eine Klebeschicht 5 aus. Die Spindel 1 weist einen Durchmesser B von in etwa 15 mm auf. Der Mantel 3 hat eine Materialstärke C von etwa 3 mm.

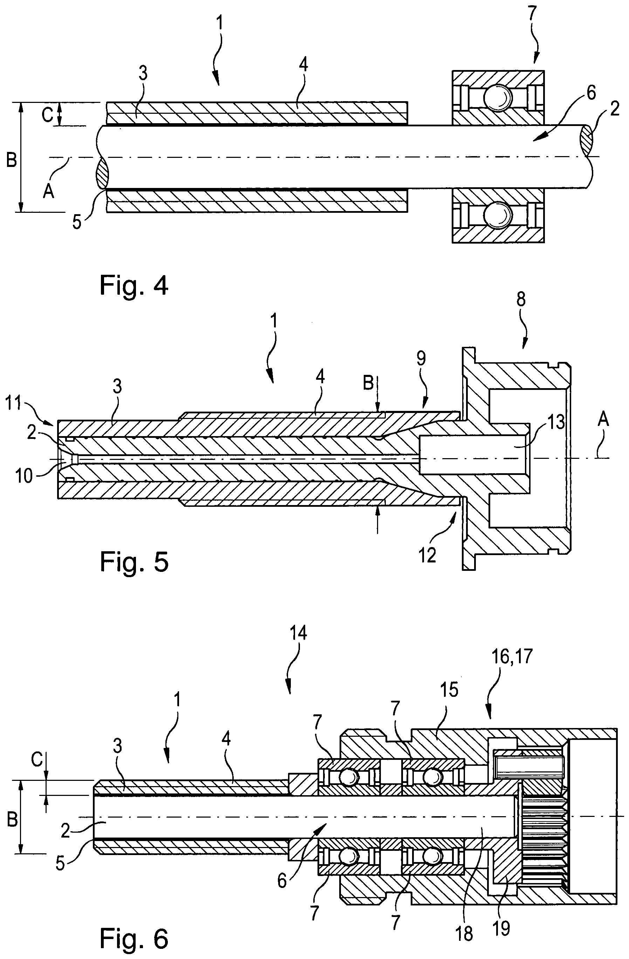

Fig. 4 zeigt ein zweites Ausführungsbeispiel einer erfindungsgemäßen Spindel. Die Spindel 1 der Fig. 4 entspricht im Wesentlichen der in den Fig. 1 bis 3 dargestellten Spindel 1. Zusätzlich weist die Spindel 1 der Fig. 4 an einem Ende einen Lagerabschnitt 6 auf, in dem der Mantel 3 den Kern 2 nicht umgibt. Im Lagerabschnitt 6 ist die Spindel 1 über den Kern 2 lagerbar. Im dargestellten Ausführungsbeispiel ist ein Kugellager 7 im Lagerabschnitt 6 am Kern 2 angebracht. Mit dem Kugellagers 7 kann die Spindel 1 beispielsweise an einem Gehäuse (nicht dargestellt) oder einer sonstigen Befestigungsvorrichtung (nicht dargestellt) gelagert werden.

Fig. 5 zeigt ein drittes Ausführungsbeispiel einer erfindungsgemäßen Spindel. Die Spindel 1 der Fig. 5 entspricht im Wesentlichen der in den Fig. 1 bis 3 dargestellten Spindel 1. Das Außengewinde 4 der Spindel 1 ist nicht über die gesamte Länge des Mantels 3 ausgebildet, sondern weist an ihrem ersten axialen Ende 11 einen Abschnitt ohne Außengewinde 4 auf, in dem die Materialstärke des Mantels 3 und auch der Durchmesser der Spindel 1 gegenüber dem Rest der Spindel 1 reduziert sind. Des Weiteren weist die Spindel 1 ausgehend von ihrem ersten axialen Ende 11 eine zentrale Bohrung 10 auf. Der Kern 2 der Spindel 1 ist daher nicht vollzylindrisch, sondern hohlzylindrisch. Zusätzlich weist die Spindel 1 an ihrem zweiten axialen Ende 12 ein Verbindungselement 8 auf. Das Verbindungselement 8 ist einteilig mit dem Kern 2 der Spindel 1 ausgebildet, wobei der Kern 2 einen Übergangsbereich 9 aufweist, in dem der Durchmesser des Kerns 2 konisch zunimmt. Gleichzeitig nimmt die Dicke des Mantels 3 im Übergangsbereich 9 so ab, dass der Außendurchmesser B der Spindel im Übergangsbereich 9 konstant bleibt. Das Verbindungselement 8 weist eine Bohrung 13 auf, die exzentrisch zur Achse A der Spindel 1 angeordnet ist. Dadurch lässt sich die Spindel 1 mit einer als Exzenterbolzen ausgebildeten Ausgangswelle eines Getriebes oder Motors koppeln, um einen erfindungsgemäßen Spindelantrieb herzustellen.

Fig. 6 zeigt die Spindel 1 und das Antriebselement 17 eines erfindungsgemäßen Spindelantriebs 14. Die Spindel 1 entspricht im Wesentlichen der in den Fig. 1 bis 3 dargestellten Spindel 1. Das Antriebselement 17 ist als Getriebe 16 mit einem Gehäuse 15 ausgebildet. Die Spindel 1 weist einen Lagerabschnitt 6 auf, in dem sie mit zwei Kugellagern 7 verbunden ist. Über die Kugellager 7 ist die Spindel 1 am Gehäuse 15 des Getriebes 16 gelagert. Anschließend an den Lagerabschnitt 6 weist die Spindel 1 ein Verbindungselement 8 auf, welches als ein Abschnitt 18 ausgebildet ist, in dem der Mantel 3 den Kern 2 nicht umgibt. In diesem Abschnitt 18 ist die Spindel an den Planetenträger 19 des Getriebes 16 gekoppelt. Im dargestellten Ausführungsbeispiel ist die Spindel 1 einteilig mit dem Antriebselement 17 ausgebildet, da der Kern 2 als Ausgangswelle des Getriebes 16 ausgebildet ist.

## Patentansprüche

1. Spindel (1), mit einem Außengewinde (4) und einer Oberfläche aus Keramik, wobei die Spindel (1) einen Kern (2) aus Metall und einen Mantel (3) aus Keramik aufweist, wobei der Mantel (3) den Kern (2) zumindest abschnittsweise umgibt, **dadurch gekennzeichnet, dass** das Außengewinde (4) nur im Mantel (3) und nicht im innenliegenden Kern (2) ausgebildet ist.

2. Spindel (1) nach Anspruch 1, **dadurch gekennzeichnet, dass** der Kern (2) im Wesentlichen zylinderförmig ausgebildet ist.

3. Spindel (1) nach einem der vorherigen Ansprüche, **dadurch gekennzeichnet, dass** der Mantel (3) im Wesentlichen hohlzylinderförmig ausgebildet ist.

4. Spindel (1) nach einem der vorherigen Ansprüche, **dadurch gekennzeichnet, dass** der Kern (2) aus Stahl besteht.

5. Spindel (1) nach einem der vorherigen Ansprüche, **dadurch gekennzeichnet, dass** der Mantel (3) aus einer Oxidkeramik, insbesondere aus Zirkonoxid besteht.

6. Spindel (1) nach einem der vorherigen Ansprüche, **dadurch gekennzeichnet, dass** der Mantel (3) nach dem CIM-Verfahren hergestellt ist.

7. Spindel (1) nach einem der vorherigen Ansprüche, **dadurch gekennzeichnet, dass** die Spindel (1) einen Durchmesser (B) von höchstens 15 mm aufweist.

8. Spindel (1) nach einem der vorherigen Ansprüche, **dadurch gekennzeichnet, dass** der Kern (2) einen Lagerabschnitt (6) aufweist, in dem der Mantel (3) den Kern (2) nicht umgibt und in dem die Spindel (1) lagerbar ist.

9. Spindel (1) nach einem der vorherigen Ansprüche, **dadurch gekennzeichnet, dass** der Kern (2) und der Mantel (3) stoffschlüssig miteinander verbunden sind.

10. Spindel (1) nach Anspruch 10, **dadurch gekennzeichnet, dass** der Kern (2) und der Mantel (3) miteinander verklebt sind.

11. Spindel (1) nach einem der Ansprüche 1 bis 11, **dadurch gekennzeichnet, dass** der Mantel (3) als Beschichtung auf den Kern (2) aufgebracht ist.

12. Spindel (1) nach einem der vorherigen Ansprüche, **dadurch gekennzeichnet, dass** der Kern (2) mehrschichtig ist.

13. Spindel (1) nach einem der vorherigen Ansprüche, **dadurch gekennzeichnet, dass** der Mantel (3) mehrschichtig ist.

14. Spindelantrieb (14) mit einem Antriebselement (17) und einer von dem Antriebselement (17) angetriebenen Spindel (1) nach einem der Ansprüche 1 bis 13.

15. Spindelantrieb (14) nach Anspruch 14, **dadurch gekennzeichnet, dass** die Spindel (1) ein Verbindungselement (8) aufweist, mit dem die Spindel (1) an das Antriebselement (17) koppelbar ist.

## Claims

1. Spindle (1), having an external thread (4) and a surface made of ceramic, the spindle (1) comprising a core (2) made of metal and a jacket (3) made of ceramic, the jacket (3) surrounding the core (2) at least in sections, **characterized in that** the external thread (4) is only formed in the jacket (3) and not in the interior core (2).

2. Spindle (1) according to claim 1, **characterized in that** the core (2) is essentially of a cylindrical design.

3. Spindle (1) according to one of the preceding claims, **characterized in that** the jacket (3) is essentially of a hollow cylindrical design.

4. Spindle (1) according to one of the preceding claims, **characterized in that** the core (2) consists of steel.

5. Spindle (1) according to one of the preceding claims, **characterized in that** the jacket (3) consists of an oxide ceramic, in particular zirconium oxide.

6. Spindle (1) according to one of the preceding claims, **characterized in that** the jacket (3) is produced according to the CIM method.

7. Spindle (1) according to one of the preceding claims, **characterized in that** the spindle (1) has a diameter (B) of not more than 15 mm.

8. Spindle (1) according to one of the preceding claims, **characterized in that** the core (2) comprises a bearing section (6) in which the jacket (3) does not surround the core (2) and in which the spindle (1) can be supported.

9. Spindle (1) according to one of the preceding claims, **characterized in that** the core (2) and the jacket (3) are connected to each other in a material-locking manner.

10. Spindle (1) according to claim 10, **characterized in that** the core (2) and the jacket (3) are adhesively bonded to each other.

11. Spindle (1) according to one of claims 1 to 11, **characterized in that** the jacket (3) is applied as a coating to the core (2).

12. Spindle (1) according to one of the preceding claims, **characterized in that** the core (2) is multi-layered.

13. Spindle (1) according to one of the preceding claims, **characterized in that** the jacket (3) is multi-layered.

14. Spindle drive (14) having a drive element (17) and a spindle (1) driven by the drive element (17) according to one of claims 1 to 13.

15. Spindle drive (14) according to claim 14, **characterized in that** the spindle (1) comprises a connecting element (8) with which the spindle (1) can be coupled to the drive element (17).

## Revendications

1. Broche (1) comportant un filetage extérieur (4) et une surface en céramique, la broche (1) présentant une âme (2) en métal et une enveloppe (3) en céramique, l'enveloppe (3) entourant l'âme (2) au moins par secteurs, **caractérisée en ce que** le filetage extérieur (4) est réalisé uniquement dans l'enveloppe (3) et non pas dans l'âme (2) située à l'intérieur.

2. Broche (1) selon la revendication 1, **caractérisée en ce que** l'âme (2) est d'une configuration de forme sensiblement cylindrique.

3. Broche (1) selon l'une des revendications précédentes, **caractérisée en ce que** l'enveloppe (3) est d'une configuration de forme sensiblement cylindrique creuse.

4. Broche (1) selon l'une des revendications précédentes, **caractérisée en ce que** l'âme (2) est réalisée en acier.

5. Broche (1) selon l'une des revendications précédentes, **caractérisée en ce que** l'enveloppe (3) est réalisée en une céramique d'oxyde, notamment en oxyde de zirconium.

6. Broche (1) selon l'une des revendications précédentes, **caractérisée en ce que** l'enveloppe (3) est fabriquée selon un procédé CIM (moulage par injection de céramique).

7. Broche (1) selon l'une des revendications précédentes, **caractérisée en ce que** la broche (1) présente un diamètre (B) d'au maximum 15 mm.

8. Broche (1) selon l'une des revendications précédentes, **caractérisée en ce que** l'âme (2) présente un secteur de montage sur palier (6) dans lequel l'enveloppe (3) n'entoure pas l'âme (2), et par lequel la broche (1) peut être montée dans un palier.

9. Broche (1) selon l'une des revendications précédentes, **caractérisée en ce que** l'âme (2) et l'enveloppe (3) sont assemblées mutuellement par continuité de matière.

10. Broche (1) selon la revendication 9, **caractérisée en ce que** l'âme (2) et l'enveloppe (3) sont assemblées mutuellement par collage.

11. Broche (1) selon l'une des revendications 1 à 9, **caractérisée en ce que** l'enveloppe (3) est rapportée en tant que revêtement sur l'âme (2).

12. Broche (1) selon l'une des revendications précédentes, **caractérisée en ce que** l'âme (2) est à couches multiples.

13. Broche (1) selon l'une des revendications précédentes, **caractérisée en ce que** l'enveloppe (3) est à couches multiples.

14. Système d'entrainement à broche également dit entraînement à vis (14) comprenant un élément d'entrainement (17) et une broche (1) selon l'une des revendications 1 à 13, qui est entrainée par l'élément d'entrainement (17).

15. Système d'entrainement à broche (14) selon la revendication 14, **caractérisé en ce que** la broche (1) comporte un élément de liaison (8) par l'intermédiaire duquel la broche (1) peut être couplée à l'élément d'entrainement (17).
